(19) Europäisches Patentamt / European Patent Office / Office européen des brevets

(11) **EP 1 545 871 B1**

(12) **FASCICULE DE BREVET EUROPEEN**

(45) Date de publication et mention
de la délivrance du brevet:
**14.08.2013 Bulletin 2013/33**

(51) Int Cl.:
***B32B 15/08*** *(2006.01)*          ***B32B 15/14*** *(2006.01)*
***B64C 1/12*** *(2006.01)*

(21) Numéro de dépôt: **03773792.1**

(86) Numéro de dépôt international:
**PCT/FR2003/002764**

(22) Date de dépôt: **19.09.2003**

(87) Numéro de publication internationale:
**WO 2004/028798 (08.04.2004 Gazette 2004/15)**

(54) **FEUILLES COMPOSITES STRATIFIEES ALUMINIUM - FIBRES DE VERRE**

ALUMINIUM-GLASFASERN VERBUNDSCHICHTFOLIE

LAMINATED ALUMINIUM/FIBRE GLASS COMPOSITE SHEETS

(84) Etats contractants désignés:
**AT BE BG CH CY CZ DE DK EE ES FI FR GB GR
HU IE IT LI LU MC NL PT RO SE SI SK TR**

(30) Priorité: **25.09.2002 FR 0211841**

(43) Date de publication de la demande:
**29.06.2005 Bulletin 2005/26**

(73) Titulaire: **Constellium France
75008 Paris (FR)**

(72) Inventeurs:
• **EHRSTROM, Jean-Christophe
F-38130 Echirolles (FR)**
• **WARNER, Timothy
F-38340 Voreppe (FR)**

(74) Mandataire: **Fénot, Dominique et al
Alcan Centre de Recherches de Voreppe
725, rue Aristide Berges- BP 27
38341 Voreppe (FR)**

(56) Documents cités:
**EP-A- 0 056 288        EP-A- 0 312 151
WO-A-98/53989        US-A- 4 657 717
US-A- 5 547 735**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine de l'invention**

L'invention concerne des nouvelles feuilles composites stratifiées aluminium - fibres de verre avec adhésif - aluminium, un matériau connu sous le nom générique « Glare », et l'utilisation de telles feuilles composites stratifiées en construction aéronautique, et notamment comme peau de revêtement de fuselage.

**Etat de la technique**

On connaît depuis longtemps des composites stratifiés aluminium - fibre à base de polymères organiques - aluminium. Les polymères organiques sont typiquement des polyamides ou des polyesters. A titre d'exemple, les brevets EP 0 056 288 B1 et EP 0 056 289 B1 (Technische Hogeschool Delft) divulguent un matériau stratifié, constitué de deux tôles minces en aluminium à traitement thermique (notamment en alliages 2024 T3 et 7075 T6) enserrant une couche adhésive, dans laquelle sont noyées des fibres en polyparaphénylène-téréphtalamide (PPDT) ayant un module d'élasticité élevé, compris entre 50 GPa et 250 GPa. Plusieurs couches alternées de matière organique et d'aluminium peuvent ainsi être superposées. Ce type de matériau à base de fibres organiques ne peut pas être utilisé à des températures élevées, typiquement au-delà de 120 °C à 130 °C, pour des durées prolongées. De plus, la maîtrise des contraintes résiduelles dans ces feuilles composites stratifiées est difficile.

Le brevet EP 0 312 150 B1 (Structural Laminates Company) divulgue l'utilisation de fibres de carbone, aramide, polyéthylène ou verre sous forme de filaments continus s'étendant parallèlement les uns aux autres dans au moins une direction. Ces fibres sont imprégnées par un adhésif thermoplastique. Les feuilles ou panneaux composites stratifiées sont précontraintes.

La demande de brevet EP 0 323 60 A1 (Akzo Nobel) divulgue un procédé de fabrication d'éléments structuraux pour fuselage d'avion incorporant des feuilles composites stratifiées, qui utilise des résines thermodurcissables, notamment des résines époxy. L'homme du métier désigne ces feuilles composites stratifiées par le nom générique « Glare ».

Le brevet US 5,547,735 (Structural Laminates Company) décrit l'utilisation de tôles en alliage 5052 dans des complexes composites stratifiés. Le brevet US 4,657,717 (Alcan International) décrit l'utilisation de tôles superplastiques dans de tels complexes. La demande de brevet WO 98/53989 (Akzo Nobel) divulgue un procédé de fabrication de feuilles composites stratifiées incorporant des tôles métalliques en alliages à base d'aluminium, cuivre, magnésium, acier ou titane. Les alliages préférés sont les alliages de type 2x24 T3 et 7x75 T6.

L'état de la technique, les procédés de fabrication, les caractéristiques et les applications des complexes stratifiés aluminium - fibre de verre de type Glare sont résumés dans l'article « Fibre Metal Laminates for High Capacity Aircraft » de A. Vlot, L.B. Vogelesang et T.J. de Vries, 30th International SAMPE Technical Conférence, October 20-24, 1998, pages 456 - 470, et dans l'article « The Residual Strength of Fibre Metal Laminates: Glare 2 and Glare 3» de C.A.J.R. Vermeeren, 30th International SAMPE Technical Conference, October 20-24, 1998, pages 471 - 482.

Le terme « alliage à traitement thermique » est défini pour l'aluminium dans la norme EN 12258-1 comme un « alliage qui peut être durci par un traitement thermique approprié » ; le terme opposé « alliage sans traitement thermique » est défini dans la même norme comme « un alliage qui ne peut être durci de façon substantielle par un traitement thermique ». On compte parmi les alliages à traitement thermique les alliages des séries 2xxx, 7xxx et 6xxx, alors que les alliages des séries 5xxx et 3xxx sont des alliages sans traitement thermique.

Typiquement, les feuilles composites stratifiées selon l'état de la technique comportent N tôles minces en alliage d'aluminium à traitement thermique qui alternent avec N-1 feuilles de résine époxy renforcée avec des fibres de verre ; ces feuilles de résine époxy renforcée avec des fibres de verre sont parfois appelées « prepreg ». Dans ces assemblages, les tôles d'aluminium forment les faces extérieures du composite stratifié et alternent avec les feuilles de résine renforcée avec des fibres de verre. On utilise comme alliage à traitement thermique des alliages appartenant aux familles 2xxx ou 7xxx, et plus particulièrement l'alliage 2024 à l'état T3. L'épaisseur desdites tôles minces en alliage d'aluminium est typiquement de l'ordre de 0,1 mm à 0,6 mm. La tôle externe du complexe stratifié est habituellement une tôle plaquée, afin de minimiser la corrosion de cette face externe. L'épaisseur totale du complexe stratifié dépend de l'application : pour une peau de fuselage, elle est de l'ordre de 3 mm, alors que pour un renfort de peau de porte d'avion, une épaisseur de l'ordre de 20 mm peut être nécessaire (voir l'article de B. Isink « Mit Glare 'erleichtert' abheben », paru dans la revue Airbus News, 1 novembre 2001).

Ces feuilles composites stratifiées selon l'état de la technique montrent certains inconvénients. Tout d'abord, les tôles minces en alliages à traitement thermique sont coûteuses car leur procédé de fabrication est complexe. Par ailleurs, la plupart des alliages des familles 2xxx et 7xxx, et notamment tous les alliages desdites familles qui sont utilisés pour la fabrication d'éléments structuraux pour application aéronautique, sont sensibles à la corrosion. Pour cette raison, lorsque cette sensibilité à la corrosion est gênante, on utilise comme face externe de l'élément structural des tôles plaquées. D'une façon générale, le traitement thermique d'une tôle mince est délicat, car elle risque de se déformer, notamment lors de la trempe. Cela nécessite des mesures correctives se traduisant par des étapes de procédé supplémentaires, par exemple le défripage, le planage, ou la traction contrôlée. Le traitement thermique de tôles minces plaquées est encore plus délicat, car à haute température, certains éléments chimiques contenus dans l'âme peuvent diffuser dans le placage. A titre d'exemple, si le cuivre contenu dans les alliages 2xxx, tel que le 2024, parvient à se répandre dans la couche de placage, celle-ci ne jouera plus correctement son rôle de protection contre la corrosion et peut être attaquée par l'environnement. Par ailleurs, la couche de plaquage étant mécaniquement peu résistante, les tôles minces plaquées doivent être manipulées avec précaution pour éviter des rayures de surface, qui peuvent être des sites de corrosion. Par conséquent, les tôles minces plaquées sont significativement plus chères à fabriquer, et en plus on constate lors de leur fabrication un taux de rebut plus élevé que chez les tôles non plaquées de même alliage, épaisseur et état métallurgique, ce qui augmente encore leur coût de revient. Ce problème se prolonge même après la fabrication d'un complexe stratifié de type Glare : si lors de la manipulation d'un tel complexe une rayure accidentelle entraîne un défaut rédhibitoire, la pièce doit être rebutée et toute la valeur ajoutée que représente la fabrication du complexe stratifié est perdue.

Il serait donc souhaitable de disposer de feuilles composites stratifiées aluminium - fibres de verre qui utilisent des tôles minces en alliage d'aluminium issues d'un procédé de fabrication plus simple que les tôles minces en alliages des familles 2xxx et 7xxx utilisées dans les feuilles composites stratifiées connues. Plus particulièrement, il serait souhaitable que lesdites tôles minces soient moins sensibles à la corrosion que celles en alliages de type 2xxx ou 7xxx de façon à éviter l'usage de tôles minces plaquées, et que les feuilles composites stratifiées incorporant ces tôles aient des caractéristiques mécaniques comparables aux feuilles composites stratifiées connues.

## Objet de l'invention

L'invention a pour objet un feuille composite stratifiée aluminium - fibres de verre telle que definie dans la revendication 1.

Un autre objet de l'invention est l'utilisation d'une telle feuille comme élément structural, notamment en construction aéronautique.

## Description des figures

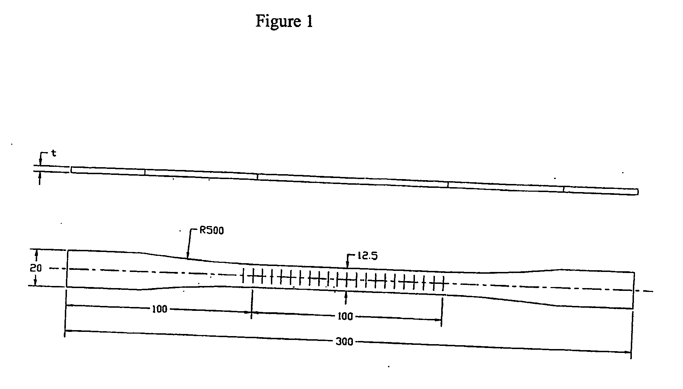

La figure 1 montre deux vues schématiques de l'éprouvette utilisée pour la détermination des caractéristiques mécaniques statiques des feuilles composites stratifiées selon la norme ASTM D 3039-76. Le paramètre t indique l'épaisseur de la feuille. Les dimensions sont indiquées en millimètres.

## Description de l'invention

Sauf mention contraire, toutes les indications relatives à la composition chimique des alliages sont exprimées en pour-cent massique. La désignation des alliages suit les règles de The Aluminum Association. Les états métallurgiques sont définis dans la norme européenne EN 515. Sauf mention contraire, les caractéristiques mécaniques statiques, c'est-à-dire la résistance à la rupture $R_m$, la limite élastique $R_{p0,2}$, et l'allongement à la rupture A, des tôles métalliques sont déterminées par un essai de traction selon la norme EN 10002-1. Le terme « tôle mince » est compris ici comme un produit laminé en alliage d'aluminium dont l'épaisseur uniforme est inférieure à 6 mm, alors que la norme EN 12258-1 utilise pour des produits laminés dont l'épaisseur est inférieure ou égale à 0,20 mm le terme « feuille mince ».

La demanderesse a constaté qu'il est possible de fabriquer des feuilles composites stratifiées en utilisant certains types de tôles minces en alliages d'aluminium sans traitement thermique, de type Al-Mg avec une teneur en magnésium comprise entre 4 et 6%. La demanderesse a constaté que la limite d'élasticité et la résistance mécanique des feuilles composites stratifiées de type Glare augmentent de façon approximativement linéaire avec la limite d'élasticité et la résistance à la rupture des tôles minces de base. Pour les tôles à très haute limite d'élasticité, la limite d'élasticité des feuilles composites stratifiées de type Glare est certes nettement inférieure à celle des tôles minces de base, mais continue à augmenter avec la limite d'élasticité de la tôle mince de base.

Toutefois, pour certaines applications techniques, la limite d'élasticité et la résistance à la rupture, à condition qu'elles atteignent un certain niveau minimal, ne sont pas déterminantes. Ceci est notamment le cas lorsque pour l'élément structural en service, des fissures d'une certaine taille maximale sont tolérées. A titre d'exemple, lorsque l'on envisage d'utiliser les feuilles composites stratifiées comme panneaux de revêtement de fuselage d'un avion, c'est plutôt la résistance résiduelle d'un panneau fissuré qui est le paramètre critique qui détermine le choix du type de composite à utiliser. Or, la demanderesse a constaté que ce paramètre ne dépend pas d'une façon simple des paramètres des tôles minces ou feuilles minces de base.

Tous les alliages d'aluminium sans traitement thermiques de type Al-Mg avec une teneur en magnésium comprise entre 4 et 6% présentant une limite d'élasticité, une résistance à la rupture et une ténacité suffisantes peuvent convenir à la réalisation de l'invention. Plus particulièrement, pour la fabrication de feuilles composites stratifiées destinées à être utilisées comme élément structural en construction aéronautique, on utilise des tôles présentant les caractéristiques mécaniques statiques suivantes : une limite d'élasticité d'au moins 240 MPa et préférentiellement d'au moins 260 MPa, et une résistance à la rupture d'au moins 260 MPa et préférentiellement d'au moins 275 MPa. Lesdites tôles présentent en plus desdites caractéristiques mécaniques statiques une ténacité caractérisée par un facteur d'intensité de contrainte apparent $K_{CO}$, mesuré selon la norme ASTM E 561 sur un panneau de 400 mm de largeur comportant une fissure initiale de 133 mm, d'au moins 75 MPa√m. Dans une réalisation préférée de l'invention, la tôle présente une valeur de $K_{CO}$ d'au moins 80 MPa√m, et encore plus préférentiellement d'au moins 85 MPa√m.

On préfère les alliages Al-Mg présentant une teneur en magnésium comprise entre 4 et 6 %, qui montrent une résistance mécanique élevée et peuvent être fabriquées de façon à montrer une résistance à la corrosion satisfaisante. Ces tôles ont une teneur en manganèse comprise entre 0,2 et 1 %.

A titre d'exemple, la demanderesse a obtenu des panneaux selon l'invention utilisant des tôles en alliage 5186 H12 présentant une limite d'élasticité d'au moins 250 MPa, qui ont une résistance résiduelle et une contrainte limite comparables aux panneaux utilisant des tôles en alliage 2024 T3. On peut avantageusement utiliser des alliages de type 5xxx encore plus résistants, ou dans des états métallurgiques écrouis plus durs, tels que H16, H18, H19. On peut utiliser des tôles dans des états peu écrouis (au plus H14) si les tôles plus écrouies ne présentent pas une ténacité intrinsèque suffisante. On préfère des tôles qui ont à la fois une ténacité et une résistance à la rupture suffisantes. Pour ce faire, on peut ajuster la composition chimique et / ou le degré l'écrouissage des tôles. La demanderesse a constaté qu'il est préférable d'optimiser les caractéristiques mécaniques statiques et dynamiques de la tôle de base par le biais de sa composition chimique et de sa microstructure plutôt que par l'écrouissage. A titre d'exemple, l'ajout de scandium ou d'hafnium permet d'augmenter la limite d'élasticité des tôles au-dessus de 300 MPa ; la limite d'élasticité des tôles peut ainsi atteindre 330 MPa, et de façon préférée 350 MPa, ou même davantage, sans dégrader leur ténacité intrinsèque. Dans une réalisation préférée de l'invention, on utilise entre 0,1 et 0,3 %, et préférentiellement environ 0,2 % de scandium, ou entre 0,2 et 0,4 %, et préférentiellement environ 0,3 %, de hafnium, sachant que ces deux éléments peuvent se substituer mutuellement, en tenant compte de la plus grande efficacité du scandium par rapport au hafnium. On peut aussi utiliser d'autres éléments qui forment des dispersoïdes durcissants, tels que Zr, Cr, La, Ti, Ce, Nd, Eu, Gd, Tb, Dy, Ho, Er, Y, Yb. Il est préféré que la concentration de chacun desdits éléments ne dépasse pas 0,5%, et la concentration totale desdits éléments de dépasse pas 2%. Ainsi, il est possible d'obtenir des produits qui ont des propriétés mécaniques comparables à celles du produit standard, c'est-à-dire les feuilles composites stratifiées de type Glare incorporant des tôles minces en 2024 T3, tout en évitant de faire appel aux tôles minces à durcissement structural, et / ou aux tôles minces plaquées.

La demanderesse a obtenu de bons résultats avec des tôles minces en alliages 5186, 5182, 5083, 5086, 5383, 5456. Les produits obtenus avec des tôles minces 5186 H14, H16 et H28 sont particulièrement préférées ; ces tôles présentent préférentiellement une valeur de $K_{CO}$ d'au moins 80 MPa√m, et préférentiellement d'au moins 85 MPa√m. La demanderesse a également obtenu de bons résultats avec des tôles minces en alliage 5383 à l'état H116 ($K_{CO}$ supérieur à 85 MPa√m). A titre de comparaison, la valeur de $K_{CO}$ d'une tôle en alliage 2024 est de l'ordre de 85 à 90 MPa√m.

Selon l'invention, on peut également fabriquer des complexes stratifiés aluminium - fibres de verre dans lesquels l'une des tôles externes, ou les deux tôles externes, sont en alliage sans traitement thermique, alors que les autres tôles sont en alliages à traitement thermique ; un tel complexe peut par exemple comporter une tôle extérieure en alliage 5186 H14, les autres tôles étant en 2024 T3 traditionnel. On remplace ainsi une tôle plaquée à traitement thermique par une tôle non plaquée sans traitement thermique présentant des caractéristiques mécaniques sensiblement similaires.

Dans une autre réalisation avantageuse de l'invention, on utilisé des tôles en alliage 5182 ou 5186 laminées à froid, typiquement à l'état H111 ou H24, avec une épaisseur typique comprise entre 0,2 et 0,4 mm.

Les feuilles composites stratifiées selon l'invention comportent N tôles en alliage d'aluminium qui alternent avec N-1 couches de polymère ; N étant au moins égal à 2, mais une valeur de 3 ou 4 est préférée à une valeur de 2. Elles peuvent être fabriquées selon les procédés connus de l'homme du métier. On utilise de façon préférée un polymère thermodurcissable, par exemple un polymère de type époxy. L'épaisseur des tôles dans les feuilles composites stratifiées selon l'invention est avantageusement inférieure à 1 mm, et préférentiellement comprise entre 0,2 et 0,6 mm. Dans certains cas, elle peut être inférieure à 0,2 mm, et même inférieure à 0,1 mm.

Les produits selon l'invention peuvent être utilisés comme élément structural, et notamment en construction aéronautique. Une application préférée est celle comme élément structural d'aéronef, et plus particulièrement pour des éléments structuraux pour lesquels le concepteur tolère, en situation de service, la présence de fissures d'une certaine taille maximale. Une application particulièrement préférée est celle comme panneau de revêtement de la partie supérieure du fuselage (appelé « upper shell » en anglais) d'un avion. Une autre application est celle comme élément de porte d'aéronef.

Les produits selon l'invention ont de nombreux avantages. Le prix des tôles en alliage sans traitement thermique est très significativement plus bas que celui des tôles en alliages à traitement thermique. La meilleure résistance à la corrosion des tôles en alliage 5xxx par rapport aux tôles en 2024 permet de simplifier ou même de supprimer le traitement de surface anti-corrosion des faces externes, et de se contenter d'un revêtement de surface (peinture par exemple) moins épais et plus léger. Cela permet de fabriquer des éléments structuraux plus légers, moins chers, et avec des procédés moins polluants.

**Exemple**

On a préparé des feuilles composites stratifiées de type Glare incorporant quatre tôles minces identiques d'épaisseur 0,5 mm et trois couches de fibre de verre et d'adhésif époxy (couches « prepreg ») d'épaisseur identique de 0,25 mm. Chacune des trois couches prepreg contient des fibres superposées au sens 0° et 90°. La largeur des panneaux était de 800 mm, leur longueur de 1200 mm.

Les tôles minces ont été soigneusement nettoyées pour enlever des particules métalliques ou non métalliques. Le composite a été préparé selon une technique connue. La cuisson du composite a été effectuée dans un autoclave avec un cycle thermique défini par les points

$$(t_1 = 0 \text{ min} / T_1 = 20 \text{ °C} / P_1 = 1000 \text{ Mbar}),$$

$$(t_2 = 10 \text{ min} / T_2 = 20 \text{ °C} / P_2 = 6000 \text{ Mbar}),$$

$$(t_3 = 55 \text{ min} / T_3 = 120 \text{ °C} / P_3 = 6000 \text{ Mbar}),$$

$$(t_4 = 145 \text{ min} / T_4 = 120 \text{ °C} / P_4 = 6000 \text{ Mbar}),$$

$$(t_5 = 161 \text{ min} / T_5 = 40 \text{ °C} / P_5 = 6000 \text{ Mbar}),$$

$$(t_6 = 165 \text{ min} / T_6 = 20 \text{ °C} / P_6 = 1000 \text{ Mbar}).$$

On a ainsi préparé des feuilles composites stratifiées avec des tôles non plaquées en différents alliages et états métallurgiques : 5186 H12, 2024 T3, 2024A T3, 2024A T39. Les caractéristiques mécaniques statiques de ces tôles de base ont été déterminées selon la norme EN 10002-1.

On a déterminé les caractéristiques mécaniques statiques des feuilles composites stratifiées selon la procédure décrite dans la norme ASTM D 3039-76 dans le sens parallèle à la direction de laminage des tôles, et dans le sens perpendiculaire au sens de laminage des tôles. Le principe des éprouvettes est montré sur la figure 1. Les paramètres obtenus sont : la limite d'élasticité $R_{p0,2}$ et la résistance à la rupture $R_m$. On a effectué un essai de résistance résiduelle d'un panneau fissuré selon la norme ASTM E-561 ; le dépouillement de ces mesures a été fait suivant l'enseignement du livre de T.J. de Vries, « Blunt and sharp notch behaviour of Glare laminates », Delft University Press 2001, pages 59 à 68. Ce livre informe également sur la forme précise de l'éprouvette.

Les résultats sont présentés dans le tableau 1. Les caractéristiques mécaniques statiques indiquées sont des valeurs moyennes de cinq mesures.

Tableau 1 : Résultats

| Référence | Tôle de base | | Feuilles composites stratifiées | | |
|---|---|---|---|---|---|
| | $R_{p0,2}$ (L) [MPa] | $R_m$ (L) [MPa] | $R_{p0,2}$ (L) [MPa] | $R_m$ (L) [MPa] | Résistance résiduelle (L) [MPa√m] |
| 2024 T3 | 369 | 484 | 307 | 634 | 195 |
| 5186 H12 | 250 | 310 | 227 | 552 | 172 |
| 2024A T3 | 360 | 460 | 288 | 613 | 219 |

(suite)

| Référence | Tôle de base | | Feuilles composites stratifiées | | |
|---|---|---|---|---|---|
| | $R_{p0,2}$ (L) [MPa] | $R_m$ (L) [MPa] | $R_{p0,2}$ (L) [MPa] | $R_m$ (L) [MPa] | Résistance résiduelle (L) [MPa√m] |
| 2024A T39 | 390 | 480 | 312 | 634 | 218 |

On constate que les panneaux selon l'invention utilisant des tôles en alliage 5186 H12 ont une résistance résiduelle tout à fait comparable aux panneaux utilisant des tôles en alliage 2024 T3 : elle est d'environ 12 % inférieures pour les panneaux selon l'invention, ce qui est acceptable, compte tenu des autres avantages techniques et économiques des produits selon l'invention.

La résistance à la corrosion des panneaux n'a pas été testée dans cet exemple ; en effet, les tôles en alliage 2xxx n'étaient pas plaquées pour simplifier la fabrication des feuilles composites stratifiées. L'homme du métier sait que la résistance à la corrosion d'un produit en alliage 2xxx tel que le 2024, dans toutes les situations d'usage comme élément structural aéronautique, est très inférieure à celle d'un alliage de la famille 5xxx tel que le 5186 (voir par exemple le chapitre « Corrosion Résistance of Aluminum and Aluminum Alloys» dans Metal Handbook, Desk Edition, 2nd edition, pages 499 à 505, ASM International).

## Revendications

1. Feuille composite stratifiée aluminium - fibres de verre, comportant N tôles en alliage d'aluminium qui alternent avec N-1 couches de polymère, N étant au moins égal à 2 et ladite couche de polymère contenant des fibres de verre, ladite feuille composite stratifiée étant **caractérisée en ce qu'**au moins une desdites tôles est en alliage d'aluminium sans traitement thermique de type Al-Mg avec une teneur en magnésium exprimée en pour-cent massique comprise entre 4 et 6% et une teneur en manganèse exprimée en pour-cent massique comprise entre 0,2 et 1 %, dans laquelle ladite tôle en alliage Al-Mg présente une limite d'élasticité selon la norme EN 10002-1 d'au moins 240 MPa, une résistance à la rupture selon la norme EN 10002-1 d'au moins 260 MPa et un facteur d'intensité de contrainte apparent $K_{CO}$, mesuré selon la norme ASTM E 561. sur un panneau de 400 mm de largeur comportant une fissure initiale de 133 mm, d'au moins 75 MPa√m.

2. Feuille composite stratifiée selon la revendication 1, dans laquelle N est au moins égal à trois.

3. Feuille composite stratifiée selon la revendication 1 ou 2, dans laquelle au moins une des faces externes est formée d'une tôle en alliage d'aluminium sans traitement thermique.

4. Feuille selon une quelconque des revendications 1 à 3, **caractérisée en ce que** l'alliage de ladite tôle en alliage d'aluminium sans traitement thermique est sélectionné le groupe constitué par les alliage 5083, 5182, 5086, 5383, 5456, 5186.

5. Feuille selon une quelconque des revendications 1 à 4, **caractérisée en ce que** ladite tôle en alliage Al-Mg est en alliage 5182 ou 5186 à l'état H111 ou H24, et a une épaisseur comprise entre 0,2 et 0,4 mm.

6. Feuille selon la revendication 1, dans laquelle l'alliage Al-Mg a une teneur en scandium comprise entre 0,1 - 0,3 %, et / ou une teneur en hafnium comprise entre 0,2 et 0,4 %.

7. Feuille selon une quelconque des revendications 1 à 6, dans laquelle l'alliage Al-Mg contient des éléments formant des dispersoïdes sélectionnés dans le groupe constitué par Zr, Cr, La, Ti, Ce, Nd, Eu, Gd, Tb, Dy, Ho, Er, Y, Yb.

8. Feuille selon une quelconque des revendications 1 à 7, dans laquelle ladite tôle en alliage Al-Mg présente une limite d'élasticité d'au moins 260 MPa, et une résistance à la rupture d'au moins 275 MPa.

9. Feuille selon la revendication 8, dans laquelle ladite tôle en alliage Al-Mg présente une limite d'élasticité d'au moins 300 MPa, et préférablement d'au moins 330 MPa.

10. Feuille selon la revendication 8 ou 9, dans laquelle ladite tôle présente un facteur d'intensité de contrainte apparent $K_{CO}$, mesuré selon la norme ASTM E 561 sur un panneau de 400 mm de largeur comportant une fissure initiale de 133 mm, d'au moins 80 MPa√m, et préférentiellement d'au moins 85 MPa√m.

**11.** Utilisation d'une feuille selon une quelconque des revendications 1 à 10 comme élément structural.

**12.** Utilisation selon la revendication 11 comme élément structural en construction aéronautique.

**13.** Utilisation selon la revendication 12 comme élément de fuselage d'un aéronef.

**14.** Utilisation selon la revendication 12 comme élément de porte d'aéronef.

**Patentansprüche**

**1.** Laminierte Aluminium-Glasfaser-Verbundfolie, umfassend N Bleche aus Aluminiumlegierung, die sich mit N-1 Polymerschichten abwechseln, wobei N mindestens gleich 2 ist und die Polymerschicht Glasfasern enthält, wobei die laminierte Verbundfolie **dadurch gekennzeichnet ist, dass** mindestens eines der Bleche aus einer nichtaushärtbaren Aluminiumlegierung vom Typ Al-Mg mit einem Magnesiumgehalt, ausgedrückt in Masseprozent, von 4 bis 6 % und einem Mangangehalt, ausgedrückt in Masseprozent, von 0,2 bis 1 % besteht, wobei das Blech aus Al-Mg Legierung eine Dehngrenze nach EN 10002-1 von mindestens 240 MPa, eine Bruchfestigkeit nach EN 10002-1 von mindestens 260 MPa und einen apparenten Spannungsintensitätsfaktor $K_{CO}$, gemessen nach ASTM E 561 an einer 400 mm breiten Platte mit einem Anriss von 133 mm, von mindestens 75 MPa√m aufweist.

**2.** Laminierte Verbundfolie gemäß Anspruch 1, wobei N mindestens gleich 3 ist.

**3.** Laminierte Verbundfolie gemäß Anspruch 1 oder 2, wobei mindestens eine der Außenflächen aus einem Blech aus nichtaushärtbarer Aluminiumlegierung gebildet ist.

**4.** Folie gemäß irgendeinem der Ansprüche 1 bis 3, **dadurch gekennzeichnet, dass** die Legierung des Blechs aus nichtaushärtbarer Aluminiumlegierung ausgewählt ist aus der Gruppe bestehend aus den Legierungen 5083, 5182, 5086, 5383, 5456, 5186.

**5.** Folie gemäß irgendeinem der Ansprüche 1 bis 4, **dadurch gekennzeichnet, dass** das Blech aus Al-Mg-Legierung aus der Legierung 5182 oder 5186 im Zustand H111 oder H24 besteht und eine Dicke zwischen 0,2 und 0,4 mm hat.

**6.** Folie gemäß Anspruch 1, wobei die Al-Mg-Legierung einen Scandium-Gehalt von 0,1 - 0,3 % und/oder einen Hafnium-Gehalt von 0,2 bis 0,4 % hat.

**7.** Folie gemäß irgendeinem der Ansprüche 1 bis 6, **dadurch gekennzeichnet, dass** die Al-Mg-Legierung Dispersoide bildende Elemente enthält, die ausgewählt sind aus der Gruppe bestehend aus Zr, Cr, La, Ti, Ce, Nd, Eu, Gd, Tb, Dy, Ho, Er, Y, Yb.

**8.** Folie gemäß irgendeinem der Ansprüche 1 bis 7, wobei das Blech aus Al-Mg-Legierung eine Dehngrenze von mindestens 260 MPa und eine Bruchfestigkeit von mindestens 275 MPa aufweist.

**9.** Folie gemäß Anspruch 8, wobei das Blech aus Al-Mg-Legierung eine Dehngrenze von mindestens 300 MPa und vorzugsweise mindestens 330 MPa aufweist.

**10.** Folie gemäß Anspruch 8 oder 9, wobei das Blech einen apparenten Spannungsintensitätsfaktor $K_{CO}$, gemessen nach ASTM E 561 an einer 400 mm breiten Platte mit einem Anriss von 133 mm, von mindestens 80 MPa√m und vorzugsweise mindestens 85MPa√m aufweist.

**11.** Verwendung einer Folie gemäß irgendeinem der Ansprüche 1 bis 10 als Strukturelement.

**12.** Verwendung gemäß Anspruch 11 als Strukturelement im Flugzeugbau.

**13.** Verwendung gemäß Anspruch 12 als Rumpfelement eines Luftfahrzeugs.

**14.** Verwendung gemäß Anspruch 12 als Türelement eines Luftfahrzeugs.

## EP 1 545 871 B1

**Claims**

1. Composite laminated aluminium - glass fibre sandwich panel, comprising N sheets made of aluminium alloy alternating with N-1 polymer layers, where N is equal to at least 2 and the said polymer layer contains glass fibres, the said laminated composite sandwich panel being **characterised in that** at least one of the said sheets is made of an aluminium non-heat treatable alloy type Al-Mg with a magnesium content of between 4 and 6 weight % and a manganese content between 0.2 and 1 weight %, in which the said sheet made of Al-Mg alloy has a yield stress according to EN 10002-1 standard of at least 240 MPa, an ultimate strength according to EN 10002-1 standard of at least 260 MPa and an apparent stress intensity $K_{CO}$, measured according to the ASTM E 561 standard on a 400 mm wide panel with an initial crack of 133 mm, of at least 75 MPa√m.

2. Composite laminated sandwich panel according to claim 1, where N is equal to at least 3.

3. Composite laminated sandwich panel according to claim 1 or 2, in which at least one of the external faces is formed of an aluminium non-heat treatable alloy sheet.

4. Sandwich panel according to any one of claims 1 to 3, **characterised in that** the aluminium non-heat treatable alloy from which the sheet is made is selected from the group consisting of 5083, 5182, 5086, 5383, 5456, 5186 alloys.

5. Sandwich panel according to any one of claims 1 to 4, **characterised in that** the said Al-Mg alloy sheet is made of the 5182 or 5186 alloy in the H111 or H24 temper, and its thickness is between 0.2 and 0.4 mm.

6. Sandwich panel according to claim 1, in which the scandium content of the Al-Mg alloy is between 0.1 and 0.3% and / or the hafnium content is between 0.2 and 0.4%.

7. Sandwich panel according to any one of claims 1 to 6, in which the Al-Mg alloy contains elements forming dispersoids selected in the group consisting of Zr, Cr, La, Ti, Ce, Nd, Eu, Gd, Tb, Dy, Ho, Er, Y, Yb.

8. Sandwich panel according to any one of claims 1 to 7, in which the said sheet made of Al-Mg alloy has a yield stress of at least 260 MPa, and an ultimate strength of at least 275 MPa.

9. Sandwich panel according to claim 8, in which the said sheet made of Al-Mg alloy has a yield stress of at least 300 MPa and preferably of at least 330 MPa.

10. Sandwich panel according to claim 8 or 9, in which the said sheet has an apparent stress intensity factor $K_{CO}$, measured according to the ASTM E 561 standard on a 400 mm wide panel with an initial crack of 133 mm, of at least 80 MPa√m, and preferentially of at least 85 MPa√m.

11. Use of a sandwich panel according to any one of claims 1 to 10 as a structural element.

12. Use according to claim 11 as a structural element in aeronautical construction.

13. Use according to claim 12 as an aircraft fuselage element.

14. Use according to claim 12 as an element for an aircraft door.

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0056288 B1
- EP 0056289 B1
- EP 0312150 B1
- EP 032360 A1
- US 5547735 A
- US 4657717 A
- WO 9853989 A

**Littérature non-brevet citée dans la description**

- **DE A. VLOT ; L.B. VOGELESANG ; T.J. DE VRIES.** Fibre Metal Laminates for High Capacity Aircraft. *30th International SAMPE Technical Conférence,* 20 Octobre 1998, 456-470
- **DE C.A.J.R. VERMEEREN.** The Residual Strength of Fibre Metal Laminates: Glare 2 and Glare 3. *30th International SAMPE Technical Conference,* 20 Octobre 1998, 471-482
- **DE B. ISINK.** Mit Glare 'erleichtert' abheben. *Airbus News,* 01 Novembre 2001
- **T.J. DE VRIES.** Blunt and sharp notch behaviour of Glare laminates. University Press, 2001, 59-68
- Corrosion Résistance of Aluminum and Aluminum Alloys. Metal Handbook. ASM International, 499-505